(19)

Europäisches
Patentamt
European
Patent Office
Office européen
des brevets

(11) **EP 4 372 848 A2**

(12) **EUROPEAN PATENT APPLICATION**

(43) Date of publication:
**22.05.2024 Bulletin 2024/21**

(21) Application number: **23210827.4**

(22) Date of filing: **20.11.2023**

(51) International Patent Classification (IPC):
**H01M 4/58** (2010.01)          **H01M 10/0568** (2010.01)
**H01M 50/417** (2021.01)

(52) Cooperative Patent Classification (CPC):
**H01M 50/417; H01M 4/581; H01M 10/0568**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.11.2022 US 202263426864 P**

(71) Applicant: **II-VI Delaware, Inc.
Wilmington, Delaware 19801 (US)**

(72) Inventors:
 • **Xu, Wen-Qing
  Sarver, 16055 (US)**

 • **Masarapu, Charan
  Sewickley, 15143 (US)**
 • **Lu, Xinyu
  Wexford, 15090 (US)**
 • **Du Hill, Linze
  Butler, 16002 (US)**
 • **Gao, Zan
  Wexford, 15090 (US)**
 • **Li, Xiaoming
  Allison Park, 15101 (US)**

(74) Representative: **Forresters IP LLP
Skygarden
Erika-Mann-Straße 11
80636 München (DE)**

(54) **ELECTROCHEMICAL DEVICE SEPARATOR**

(57)     An electrochemical device including: an anode, a cathode, an electrolyte, and a separator separating the anode from the cathode. The separator includes a material that includes at least one of: a linear polymer; a kinetic friction coefficient of up to 2.0; an elongation of at least 240, elongation defined as elongation at break; a ratio of elongation to thickness of at least 10; and/or a modulus of elasticity of up to 270 MPa.

**EP 4 372 848 A2**

**Description**

CROSS-REFERENCE TO RELATED APPLICATIONS

This application claims priority to United States Provisional Patent Application No. 63/426,864 filed on November 21, 2022, the disclosure of which is incorporated by reference herein in its entirety.

BACKGROUND

1. Field

The disclosed subject matter relates generally to electrochemical devices, methods of cycling secondary batteries, and separators configured for use in electrochemical devices.

2. Technical Considerations

The production of electrochemical devices, such as batteries, capacitors, electrochemical sensors, and fuel cells, presents many challenges. For example, certain electrochemical devices, such as secondary batteries, can be discharged and re-charged (defined as a cycle), so that they can be used multiple times. However, existing electrochemical devices cannot be cycled an infinite number of times, as after some number of cycles, a parasitic condition is exhibited, and the electrochemical device fails. Extending the number of cycles before a parasitic condition is exhibited would be desirable.

SUMMARY

Accordingly, it is an object of the presently disclosed subject matter to provide an electrochemical device that overcomes some or all of the deficiencies identified above.

According to non-limiting embodiments or aspects, provided is an electrochemical device including: an anode; a cathode; an electrolyte; and a separator separating the anode from the cathode, where the separator includes a material, where the material includes at least one of: a linear polymer; a kinetic friction coefficient of up to 2.0; an elongation of at least 240, elongation defined as elongation at break; a ratio of elongation to thickness of at least 10; and/or a modulus of elasticity of up to 270 MPa.

In some non-limiting embodiments or aspects, the material may include a polyethylene polymer.

In some non-limiting embodiments or aspects, the electrochemical device may include a lithium-chalcogen battery.

In some non-limiting embodiments or aspects, the anode may include at least one of an alkali metal from group IA, an alkaline earth metal from group IIA, an element from group IIIA, and/or some combination thereof.

In some non-limiting embodiments or aspects, the cathode may include a chalcogen.

In some non-limiting embodiments or aspects, the separator may have a surface roughness (Ra) of at least 1150 Angstroms.

In some non-limiting embodiments or aspects, the linear polymer may have a weight average molecular weight of at least 200,000 g/mol.

In some non-limiting embodiments or aspects, the separator may have a thickness of from 2 $\mu$m to 100 $\mu$m.

In some non-limiting embodiments or aspects, the cathode may include a substrate coated with a coating including a carbon-chalcogen composite.

In some non-limiting embodiments or aspects, the coating may further include a binder and conductive carbon.

In some non-limiting embodiments or aspects, the electrochemical device may include a secondary battery that performs at least 2 cycles before exhibiting a parasitic condition.

In some non-limiting embodiments or aspects, the linear polymer may include a linearity of at least 70%.

In some non-limiting embodiments or aspects, the electrolyte may include at least one of $LiBF_4$, $LiC_2F_6NO_4S_2$, $LiNS_2O_4F_2$, LiBOB, $LiPO_2F_2$, $LiPF_6$, ether, carbonate, and/or some combination thereof.

According to non-limiting embodiments or aspects, provided is a method of cycling a secondary battery that includes: (i) providing the electrochemical device as described herein, where the electrochemical device includes a secondary battery; (ii) at least partially discharging the secondary battery; (iii) at least partially charging the secondary battery; and (iv) repeating (ii) and (iii) until the secondary battery exhibits a parasitic condition during charging.

In some non-limiting embodiments or aspects, the secondary battery may be at least partially discharged and charged at least 2 times before exhibiting the parasitic condition.

According to non-limiting embodiments or aspects, a separator configured for use in an electrochemical device includes a material, where the material includes at least one of: a linear polymer; a kinetic friction coefficient of up to 2.0; an elongation of at least 240, elongation defined as elongation at break; a ratio of elongation to thickness of at least 10; and/or a modulus of elasticity of up to 270 MPa.

In some non-limiting embodiments or aspects, the material may include a polyethylene polymer.

In some non-limiting embodiments or aspects, the separator may have a surface roughness (Ra) of at least 1150 Angstroms.

In some non-limiting embodiments or aspects, the linear polymer may have a weight average molecular weight of at least 200,000 g/mol.

In some non-limiting embodiments or aspects, the separator may have a thickness of from 2 $\mu$m to 100 $\mu$m.

In some non-limiting embodiments or aspects, the separator may be arranged in a secondary battery, and the secondary battery may include: an anode including at least one of an alkali metal from group IA, an alkaline earth metal from group IIA, an element from group IIIA, and/or some combination thereof; a cathode including a chalcogen; an electrolyte; and the separator separating the anode from the cathode.

Further embodiments or aspects are set forth in the following numbered clauses:

Clause 1: An electrochemical device, comprising: an anode; a cathode; an electrolyte; and a separator separating the anode from the cathode, wherein the separator comprises a material, wherein the material comprises at least one of: a linear polymer; a kinetic friction coefficient of up to 2.0; an elongation of at least 240, elongation defined as elongation at break; a ratio of elongation to thickness of at least 10; and/or a modulus of elasticity of up to 270 MPa.

Clause 2: The electrochemical device of clause 1, wherein the material comprises a polyethylene polymer.

Clause 3: The electrochemical device of clause 1 or 2, wherein the electrochemical device comprises a lithium-chalcogen battery.

Clause 4: The electrochemical device of any of clauses 1-3, wherein the anode comprises at least one of an alkali metal from group IA, an alkaline earth metal from group IIA, an element from group IIIA, and/or some combination thereof.

Clause 5: The electrochemical device of any of clauses 1-4, wherein the cathode comprises a chalcogen.

Clause 6: The electrochemical device of any of clauses 1-5, wherein the separator has a surface roughness (Ra) of at least 1150 Angstroms.

Clause 7: The electrochemical device of any of clauses 1-6, wherein the linear polymer has a weight average molecular weight of at least 200,000 g/mol.

Clause 8: The electrochemical device of any of clauses 1-7, wherein the separator has a thickness of from 2 $\mu$m to 100 $\mu$m.

Clause 9: The electrochemical device of any of clauses 1-8, wherein the cathode comprises a substrate coated with a coating comprising a carbon-chalcogen composite.

Clause 10: The electrochemical device of clause 9, wherein the coating further comprises a binder and conductive carbon.

Clause 11: The electrochemical device of any of clauses 1-10, wherein the electrochemical device comprises a secondary battery that performs at least 2 cycles before exhibiting a parasitic condition.

Clause 12: The electrochemical device of any of clauses 1-11, wherein the linear polymer comprises a linearity of at least 70%.

Clause 13: The electrochemical device of any of clauses 1-12, wherein the electrolyte comprises at least one of $LiBF_4$, $LiC_2F_6NO_4S_2$, $LiNS_2O_4F_2$, LiBOB, $LiPO_2F_2$, $LiPF_6$, ether, carbonate, and/or some combination thereof.

Clause 14: A method of cycling a secondary battery, comprising: (i) providing the electrochemical device of any of clauses 1-13, wherein the electrochemical device comprises a secondary battery; (ii) at least partially discharging the secondary battery; (iii) at least partially charging the secondary battery; and (iv) repeating (ii) and (iii) until the secondary battery exhibits a parasitic condition during charging.

Clause 15: The method of clause 14, wherein the secondary battery is at least partially discharged and charged at least 2 times before exhibiting the parasitic condition.

Clause 16: A separator configured for use in an electrochemical device, the separator comprising a material, wherein the material comprises at least one of: a linear polymer; a kinetic friction coefficient of up to 2.0; an elongation of at least 240, elongation defined as elongation at break; a ratio of elongation to thickness of at least 10; and/or a modulus of elasticity of up to 270 MPa.

Clause 17: The separator of clause 16, wherein the material comprises a polyethylene polymer.

Clause 18: The separator of clause 16 or 17, wherein the separator has a surface roughness (Ra) of at least 1150 Angstroms.

Clause 19: The separator of any of clauses 16-18, wherein the linear polymer has a weight average molecular weight of at least 200,000 g/mol.

Clause 20: The separator of any of clauses 16-19, wherein the separator has a thickness of from 2 $\mu$m to 100 $\mu$m.

Clause 21: The separator of any of clauses 16-20, wherein the separator is arranged in a secondary battery, the secondary battery comprising: an anode comprising at least one of an alkali metal from group IA, an alkaline earth metal from group IIA, an element from group IIIA, and/or some combination thereof; a cathode comprising a chalcogen; an electrolyte; and the separator separating the anode from the cathode.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter. As used in the specification and the claims, the singular forms of "a," "an," and "the" include plural referents unless the context clearly dictates otherwise.

BRIEF DESCRIPTION OF THE DRAWINGS

Additional advantages and details of the disclosed subject matter are explained in greater detail below with reference to the exemplary embodiments or aspects that are illustrated in the accompanying figures, in which:

FIG. 1 shows a view of an electrochemical device according to some non-limiting embodiments or aspects of the presently disclosed subject matter; and
FIG. 2 shows a graph of voltage and current over time for a rechargeable electrochemical device undergoing the cycling of a discharge/charge process according to some non-limiting embodiments or aspects of the presently disclosed subject matter.

DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

As used herein, the transitional term "comprising" (and other comparable terms, e.g., "containing" and "including") is "open-ended" and open to the inclusion of unspecified matter. Although described in terms of "comprising", the terms "consisting essentially of" and "consisting of" are also within the scope of the disclosure.

Non-limiting embodiments or aspects of the disclosed subject matter are directed to an electrochemical device comprising: an anode; a cathode; an electrolyte; and a separator separating the anode from the cathode, wherein the separator comprises a material, wherein the material comprises at least one of: a linear polymer; a kinetic friction coefficient of up to 2.0; an elongation of at least 240, elongation defined as elongation at break; a ratio of elongation to thickness of at least 10; and/or a modulus of elasticity of up to 270 MPa.

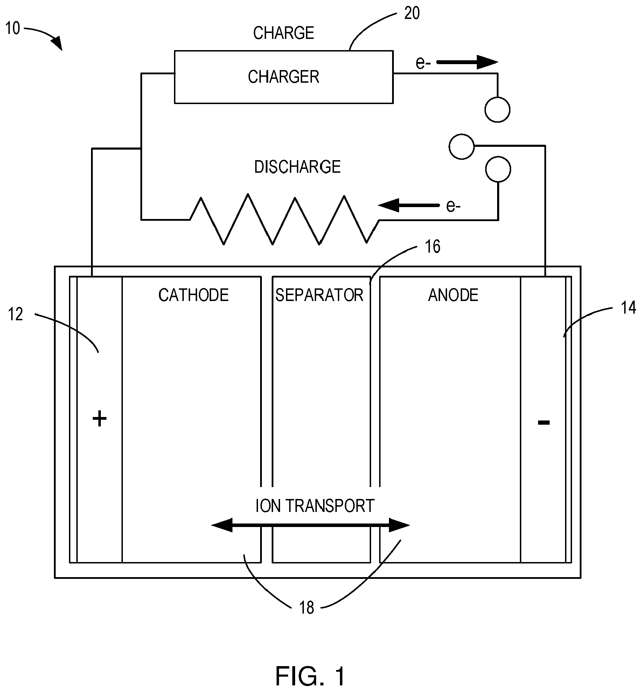

Referring to FIG. 1, an electrochemical device 10 is shown according to non-limiting embodiments or aspects. The electrochemical device 10 may comprise at least one of a battery, a capacitor, an electrochemical sensor, a fuel cell, or some combination thereof. The electrochemical device may comprise a secondary (rechargeable) battery.

The electrochemical device 10 may comprise a cathode 12 and an anode 14 separated by a separator 16. The separator 16 may prevent contact of the cathode 12 and anode 14. The electrochemical device 10 may comprise an electrolyte 18. The electrolyte 18 may promote movement of ions from the cathode 12 to the anode 14 during charging and in reverse on discharge. The separator 16 may be configured to allow for ion transport therethrough during charging and/or discharging of the electrochemical device 10. The electrochemical device 10 may comprise a charger 20 configured to recharge the electrochemical device 10 after at least partial discharge thereof.

In some non-limiting embodiments or aspects, the cathode 12 may comprise at least one of: at least one material including a chalcogen element (e.g., S, Se, O, and Te), fluoride, at least one intercalated cathode material (e.g., $LiCoO_2$, $LiMnO_2$, $LiNiO_2$, $LiCo_xNi_yMn_{1-x-y}O_2$), and $LiFePO_4$ that may include various dopants such as Ni, Mg, Al, Cr, Zn, Ti, Fe, Co, Ni, Cu, Nd, and La, at least one supercapacitor material (e.g., metal oxides/hydroxides), conductive polymers, or some combination thereof. The cathode 12 may comprise a chalcogen. The cathode 12 may comprise sulfur.

In some non-limiting embodiments or aspects, the cathode 12 may comprise a substrate coated with a coating comprising a carbon-chalcogen composite. The coating may further comprise a binder and conductive carbon. The binder may comprise a polymeric material. Non-limiting examples of suitable polymeric materials include carboxy methyl cellulose (CMC), polyvinylidene fluoride (PVDF), polytetrafluoroethylene (PTFE), styrene-butadiene rubber (SBR), polyethylene glycol dimethyl ether (PEGDME), conductive polymer(s) (such as poly(3,4-ethylenedioxythiophene) (PEDOT)), polyacrylic acid (PAA), polyethylenimine (PEI), a latex polymer, an acrylate, a polyurethane, a polyurethane acrylate, and the like.

The anode 14 may comprise at least one of: at least one element from group IVA (e.g., C, Si, Sn), at least one element from group IIIA (e.g., Al), at least one transition metal from group IB-VIIIB (e.g., Zn, Cd, Ag), at least one alkaline earth metal from group IIA (e.g., Mg, Ca), at least one alkali metal from group IA (e.g., Li, Na, K), at least one compound (e.g., $Li_xSi_y$, $Li_xGe_y$, LiAl, $Li_xSn_y$, LTO, NiO, $SiO_x$), or some combination thereof. The anode 14 may comprise at least one of an alkali metal from group IA, an alkaline earth metal from group IIA, an element from group IIIA, and/or some combination thereof. The anode 14 may comprise lithium.

In some non-limiting embodiments or aspects, the electrochemical device 10 may comprise the cathode 12 comprising a chalcogen and the anode 14 comprising lithium, such as a sulfur cathode 12 and a lithium anode 14 (e.g., a lithium-chalcogen and/or lithium-sulfur battery).

In some non-limiting embodiments or aspects, the electrolyte 18 may comprise at least one of $LiBF_4$, $LiC_2F_6NO_4S_2$, $LiNS_2O_4F_2$, LiBOB, $LiPO_2F_2$, $LiPF_6$, ether, carbonate, or some combination thereof. The electrolyte 18 may be an electrolyte used in coin cell batteries, such as disclosed in U.S. Patent No. 11,114,696 which is incorporated herein by reference in its entirety. The electrolyte 18 may comprise an alkali metal, such as lithium and/or sodium.

The electrolyte 18 may be a liquid, solid, or gel material. The electrolyte 18 may be positioned between the cathode 12 and the anode 14 (the electrodes). The electrolyte 18 may wet or soak the electrodes.

The separator 16 may comprise a material that comprises a least one of: a linear polymer, a kinetic friction coefficient of up to 2.0, an elongation of at least 240, elongation defined as elongation at break, a ratio of elongation to thickness of at least 10, a modulus of elasticity of up to 270 MPa, or any combination thereof.

In some non-limiting embodiments or aspects, the separator 16 may comprise a polymeric material. The polymeric separator may comprise a monolayer separator (e.g., monolayer polypropylene or polyethylene), a triple layer or other multilayer separator (e.g., a polypropylene-polyethylene-polypropylene separator, optionally ceramic and/or surfactant modified). The polymeric material may comprise a polypropylene polymer and/or a polyethylene polymer. The polymeric material may comprise a polyethylene polymer.

In some non-limiting embodiments or aspects, the separator 16 may comprise a polyethylene polymer. The polyethylene polymer may comprise a linear polymer as defined herein. The polyethylene polymer may comprise high density polyethylene (Mw of 200,000-500,000 g/mol). The polyethylene polymer may comprise ultra-high weight molecular weight polyethylene (UHMWPE) (Mw of 4,000,000-6,000,000 g/mol). As used herein, weight average molecular weight (Mw) is determined by standard high-temperature gel permeation chromatography (HT-GPC, ASTM D6474-19).

The separator 16 may comprise a linear polymer. The linear polymer may comprise a linearity of at least 70%, such as at least 80%, at least 90%, at least 95%, or 100%. Polymer linearity as disclosed herein is determined by the simplified Randall Method using $^{13}$C-NMR (either liquid NMR or melt-state magic angle spinning (MAS) NMR), where linearity is determined by 100 - [Area under the NMR curve of tertiary carbons/Area under the NMR curve of all carbons] %. For liquid NMR testing, chlorohydrocarbon solvents (e.g., o-Dichlorobenzen-d4, 1,2,4-Trichlorobenzene (TCB)) can be used to dissolve the polymer. For melt-state MAS, $^{13}$C-NMR is performed at 500 MHz using a 7 mm $^{13}$C- $^{1}$H optimized high temperature probe.

The linear polymer may have a weight average molecular weight of at least 200,000 g/mol, at least 500,000 at least g/mol, at least 800,000 g/mol, or at least 1,000,000 g/mol. The linear polymer may have a weight average molecular weight of up to 1,000,000,000 g/mol, such as up to 100,000,000 g/mol, up to 10,000,000 g/mol, or up to 6,000,000 g/mol. The linear polymer may comprise polyethylene.

The separator 16 may comprise a kinetic friction coefficient up to 2.0, such as up to 1.5, or up to 1.0, as determined by ASTM D1894-14. The separator 16 may comprise a kinetic friction coefficient of from 0.4 to 2.0, such as from 0.4 to 1.0.

The separator 16 may comprise an elongation of at least 240, such as at least 275, or at least 300. The separator 16 may comprise an elongation of up to 1200, such as up to 1000, or up to 750. The separator 16 may comprise an elongation of from 240 to 1200, such as from 275 to 1200, from 275 to 750, or from 300 to 750. Elongation as disclosed herein is determined at break as defined by ASTM D882 Tensile Testing.

The separator 16 may have a thickness of 2 $\mu$m to 100 $\mu$m, such as from 8 $\mu$m to 30 $\mu$m, from 7 $\mu$m to 35 $\mu$m, from 5 $\mu$m to 50 $\mu$m, from 5 $\mu$m to 30 $\mu$m, or from 9 $\mu$m to 25 $\mu$m. The separator 16 may have a thickness of at least 2 $\mu$m, such as at least 5 $\mu$m, or at least 7 $\mu$m. The separator 16 may have a thickness of up to 100 $\mu$m, such as up to 50 $\mu$m, or up to 30 $\mu$m.

The separator 16 may have a ratio of elongation to thickness of at least 10, such as at least 12, at least 13, at least 14, at least 15, or at least 16. The separator 16 may have a ratio of elongation to thickness of up to 100, such as up to 70. The separator 16 may have a ratio of elongation to thickness of from 10 to 100, such as from 13 to 70, or from 15 to 70. The ratio of elongation to thickness may be determined by dividing elongation at break of the separator 16 by the thickness thereof.

The separator 16 may have a modulus of elasticity of up to 270 MPa, such as up to 240 MPa, up to 230 MPa, up to 220 MPa, or up to 200 MPa. The separator 16 may have a modulus of elasticity of at least 80 MPa, such as at least 90 MPa, or at least 100 MPa. The separator 16 may have a modulus of elasticity of from 80 to 270, such as from 90 to 240, from 90 to 200, or from 90 to 190. Modulus of elasticity as disclosed herein is determined by ASTM D882 Tensile Testing.

The separator 16 may comprise a surface roughness (Ra) of at least 1100 Angstroms, such as at least 1150 Angstroms, at least 1175 Angstroms. The separator 16 may have a surface roughness (Ra) of up to 6500 Angstroms, such as up to 6000 Angstroms, up to 5000 Angstroms, or up to 4000 Angstroms. The separator 16 may have a surface roughness (Ra) of from 1100 to 6500, such as from 1150 to 6500 Angstroms, or from 1175 to 6500 Angstroms. Surface roughness as disclosed herein is determined using a ZYGO NewView 600 interferometer.

The separator 16 may comprise a porosity of at least 15%, such as at least 25%, at least 30%, at least 40%, at least 50%, or at least 60%, as determined using a Micromeritics AutoPore V9600 porosimeter. The separator 16 may comprise a porosity of up to 90%, such as up to 85%, or up to 80%. The separator 16 may comprise a porosity of from 15-90%, such as from 20-85%, or from 25-80%.

The separator 16 may comprise an average pore size of at least 0.05 $\mu$m, such as at least 0.07 $\mu$m, as determined using a Micromeritics AutoPore V9600 porosimeter. The separator 16 may comprise an average pore size of up to 1.0 $\mu$m, such as up to 0.8 $\mu$m, up to 0.6 $\mu$m, up to 0.15 $\mu$m, or up to 0.11 $\mu$m. The separator 16 may comprise an average pore size of from 0.05 $\mu$m to 1.0 $\mu$m, such as from 0.05 $\mu$m to 0.8 $\mu$m, from 0.05 $\mu$m to 0.6 $\mu$m, from 0.05 $\mu$m to 0.15 $\mu$m, or from 0.07 $\mu$m to 0.11 $\mu$m.

The separator 16 may comprise a toughness of at least 180 MPa, such as at least 200 MPa, or at least 300 MPa, as determined by ASTM D882 Tensile Testing. The separator 16 may comprise a toughness of up to 1250 MPa, such as up to 1000 MPa, or up to 600 MPa. The separator 16 may comprise a toughness of from 180 to 1250 MPa, such as from 200 to 1000 MPa, or from 300 to 600 MPa.

The separator 16 may comprise a tensile stress of at least 20 MPa, such as at least 25 MPa, as determined by ASTM D882 Tensile Testing. The separator 16 may comprise a tensile stress of up to 40 MPa, such as up to 35 MPa. The separator 16 may comprise a tensile stress of from 20 to 40 MPa, such as from 25 to 35 MPa.

The separator 16 may comprise a tensile strain of at least 10 MPa, such as at least 14 MPa, as determined by ASTM D882 Tensile Testing. The separator 16 may comprise a tensile strain of up to 30 MPa, such as up to 27 MPa. The separator 16 may comprise a tensile strain of from 10 to 30 MPa, such as from 14 to 27 MPa.

With continued reference to FIG. 1, the separator 16 may be arranged in an electrochemical device 10 as described herein. In some non-limiting embodiments or aspects, the separator 16 may be arranged in a secondary (rechargeable) battery (a form of electrochemical device 10). The secondary battery containing the separator 16 may comprise the cathode 12 as described herein, such as the cathode 12 comprising a chalcogen. The secondary battery containing the separator 16 may comprise the anode 14 as described herein such as the anode 14 comprising at least one of an alkali metal from group IA, an alkaline earth metal from group IIA, an element from group IIIA, and/or some combination thereof (e.g., a lithium anode). The secondary battery containing the separator 16 may comprise the electrolyte 18 as described herein. The secondary battery containing the separator 16 may comprise the separator 16 arranged to separate the cathode 12 from the anode 14.

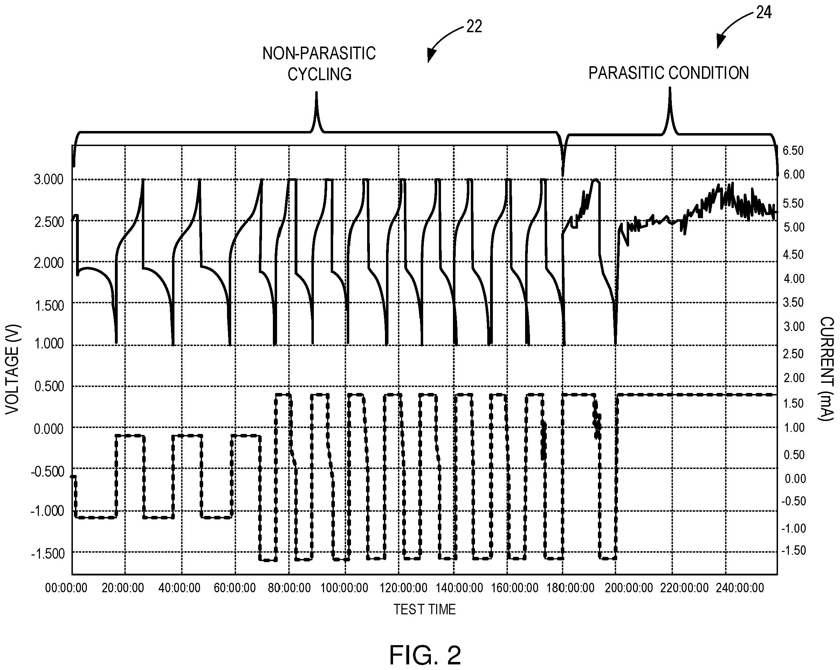

Referring to FIGS. 1 and 2, the electrochemical device 10 may comprise a secondary (rechargeable) battery. The secondary battery may be used by at least partially discharging the battery (e.g., by use thereof), followed by at least partially charging the battery (e.g., using the charger 20). The secondary battery may perform at least 2 cycles, such as at least 5 cycles, at least 10 cycles, at least 15 cycles, or at least 20 cycles before exhibiting a parasitic condition. The secondary battery may perform from 2 to 45 cycles, such as from 5 to 45 cycles, such as from 10 to 45 cycles before exhibiting a parasitic condition.

A "cycle" as used herein refers to a charge event followed by a discharge event (*see* FIG. 2), with the except that the first cycle only includes a fully charged electrochemical device being discharged. A "cycle to fail" or "number of cycles before exhibiting a parasitic condition" refers to the number of cycles it takes for the electrochemical device to exhibit a parasitic condition. A parasitic condition is defined as the cycle number which is one cycle before the coulombic efficiency of the electrochemical device falling below 100%. Coulombic efficiency is defined in Equation 1 or Equation 2:

$$\text{Equation 1. Coulombic Efficiency (\%)} = \text{(Discharge Capacity/Charge Capacity)}*100$$

Or

$$\text{Equation 2. Coulombic Efficiency (\%)} = \text{(Specific Discharge Capacity/Specific Charge Capacity)}*100$$

where specific discharge capacity and specific charge capacity are determined by the division of discharged/charged capacity of the electrochemical device by the grams of active material.

For example, the secondary battery may be exhibiting a non-parasitic cycling condition 22 for as many cycles as the secondary battery recharges before exhibiting the parasitic condition, and the secondary battery may be exhibiting a parasitic condition 24 at the first cycle for which the secondary battery exhibits the parasitic condition. For example, in the test performed and illustrated in the graph of FIG. 2, the secondary battery underwent 12 cycles exhibiting a non-parasitic cycling condition 22 and exhibited a parasitic condition 24 on the 13th cycle.

In some non-limiting embodiments or aspects, the secondary battery may be cycled by: providing the electrochemical device 10 in the form of a secondary battery as described herein. The secondary battery may be at least partially discharged, and subsequently may be at least partially charged. The secondary battery may be discharged and charged in the cyclic manner described herein, which cycles may be repeated at least until the secondary battery exhibits a parasitic condition during a charging step.

The secondary battery may comprise a coin cell battery, such as a 2032 coin cell battery. Such a coin cell battery may be fabricated from bottom to top by: into a negative case lid, stacking two stainless steel spacers (e.g., 500 $\mu$m thick and 18 mm in diameter), one lithium metal disc (e.g., 250 $\mu$m thick and 16 mm in diameter), adding electrolyte (e.g., 200 $\mu$l), placing a separator (e.g., 20 mm in diameter), adding additional electrolyte (e.g., 100 $\mu$l), placing a cathode, stacking a stainless steel spacer (e.g., 500 $\mu$m thick and 18 mm in diameter), a wave spring, and a positive case, followed by manual crimping (e.g., using a MTI MSK-110) hydraulic crimper) to a pressure of 1,000 psi, followed by releasing the crimping pressure.

**EXAMPLES**

The following examples are presented to demonstrate the general principles of the disclosure. The disclosure should not be considered as limited to the specific examples presented.

Examples 1-23

Example electrochemical devices in the form of secondary batteries were prepared using polymeric separators having the following properties shown in Tables 1-2. The secondary batteries were coin cell batteries prepared as previously described. The anode used in the electrochemical device was a 250 $\mu$m thick lithium disc. The electrolyte used in the electrochemical device was a solvent-based electrolyte. The cathode used in the electrochemical device comprised a carbon-sulfur composite material.

EP 4 372 848 A2

**Table 1**

| Example | Porosity % | Pore size (μm) | Material | Thickness (μm) | Roughness Ra (Å) | Kinetic Friction Coefficient (μ) | Elongation (%) | Elongation/Thickness |
|---|---|---|---|---|---|---|---|---|
| 1 | 60 | 0.083 | PP | 25 | 1100 | 1.191 | 268 | 10.7 |
| 2 | 60 | 0.083 | PP | 25 | 1100 | 1.191 | 268 | 10.7 |
| 3 | 62 | 0.109 | PE | 12 | 1179 | 0.934 | 704 | 58.7 |
| 4 | 62 | 0.109 | PE | 12 | 1179 | 0.934 | 704 | 58.7 |
| 5 | - | - | PE | 16 | 1621 | 0.470 | 300 | 18.7 |
| 6 | - | - | PE | 16 | 1621 | 0.470 | 300 | 18.7 |
| 7 | - | - | PE | 16 | 1621 | 0.470 | 300 | 18.7 |
| 8 | 60 | 0.070 | PE | 18 | 1800 | 0.515 | 1179 | 65.5 |
| 9 | 60 | 0.070 | PE | 18 | 1800 | 0.515 | 1179 | 65.5 |
| 10 | 60 | 0.070 | PE | 18 | 1800 | 0.515 | 1179 | 65.5 |
| 11 | - | 0.101 | PE | 20 | 3997 | 0.442 | 580 | 29.0 |
| 12 | - | 0.101 | PE | 20 | 3997 | 0.442 | 580 | 29.0 |
| 13 | - | 0.101 | PE | 20 | 3997 | 0.442 | 580 | 29.0 |
| 14 | 64 | 0.086 | PE | 25 | 3169 | 0.461 | 505 | 20.2 |
| 15 | 64 | 0.086 | PE | 25 | 3169 | 0.461 | 505 | 20.2 |
| 16 | 66 | 0.100 | PE | 9 | 6500 | 0.580 | 242 | 26.9 |
| 17 | 66 | 0.100 | PE | 9 | 6500 | 0.580 | 242 | 26.9 |
| 18 | 62 | 0.074 | PE | 12 | 2729 | 0.477 | 408 | 34.0 |
| 19 | 62 | 0.074 | PE | 12 | 2729 | 0.477 | 408 | 34.0 |
| 20 | 62 | 0.074 | PE | 12 | 2729 | 0.477 | 408 | 34.0 |
| 21 | 64 | 0.084 | PE | 20 | 2265 | 0.572 | 332 | 16.6 |
| 22 | 64 | 0.084 | PE | 20 | 2265 | 0.572 | 332 | 16.6 |
| 23 | 64 | 0.084 | PE | 20 | 2265 | 0.572 | 332 | 16.6 |

**Table 2**

| Example | Toughness (MPa) | Modulus of Elasticity (MPa) | Tensile stress (MPa) | Tensile strain (MPa) | Cathode Loading (mg-s)[1] | Cycles to Fail |
|---|---|---|---|---|---|---|
| 1 | 191 | 264.2 | 26.43 | 11.42 | 7.526 | 2 |
| 2 | 191 | 264.2 | 26.43 | 11.42 | 7.260 | 4 |
| 3 | 930 | 121.9 | 36.02 | 26.13 | 7.665 | 12 |
| 4 | 930 | 121.9 | 36.02 | 26.13 | 7.444 | 22 |
| 5 | 312 | 191.3 | 30.31 | 14.76 | 7.619 | 20 |
| 6 | 312 | 191.3 | 30.31 | 14.76 | 7.475 | 5 |
| 7 | 312 | 191.3 | 30.31 | 14.76 | 7.429 | 10 |
| 8 | 1249 | 103.3 | 26.56 | 21.62 | 7.429 | 21 |
| 9 | 1249 | 103.3 | 26.56 | 21.62 | 7.496 | 20 |
| 10 | 1249 | 103.3 | 26.56 | 21.62 | 4.470 | 14 |
| 11 | 564 | 116.6 | 26.83 | 20.61 | 7.470 | 7 |
| 12 | 564 | 116.6 | 26.83 | 20.61 | 7.532 | 23 |
| 13 | 564 | 116.6 | 26.83 | 20.61 | 7.296 | 18 |
| 14 | 424 | 104.4 | 23.98 | 19.80 | 7.465 | 17 |
| 15 | 424 | 104.4 | 23.98 | 19.80 | 7.265 | 44 |
| 16 | 235 | 156.0 | 31.81 | 18.36 | 7.757 | 7 |
| 17 | 235 | 156.0 | 31.81 | 18.36 | 7.613 | 2 |
| 18 | 347 | 90.0 | 24.58 | 23.32 | 7.337 | 19 |
| 19 | 347 | 90.0 | 24.58 | 23.32 | 7.613 | 17 |
| 20 | 347 | 90.0 | 24.58 | 23.32 | 7.670 | 6 |
| 21 | 364 | 130.2 | 33.42 | 22.75 | 7.578 | 24 |
| 22 | 364 | 130.2 | 33.42 | 22.75 | 7.588 | 26 |
| 23 | 364 | 130.2 | 33.42 | 22.75 | 7.649 | 28 |

[1]Refers to the milligrams of sulfur in the cathode disc, the cathode disc having a diameter of 12 mm.

Based on the properties and results from Tables 1-2, a regression analysis was performed on the data to determine which property, properties, and/or combination of properties most influences the number of cycles before exhibiting a parasitic condition. The regression analysis involved performing a linear regression analysis in which a P-value for each independent variable (e.g., properties of the separator) tests the null hypothesis that the variable has no correlation with the dependent variable (e.g., cycles before exhibiting a parasitic condition). If the P-value for a variable is less than the significance level, for example 0.01 or below, it indicates 99% confidence that the slope of the regression line is not zero and hence there is a significant linear relationship between the dependent and independent variables.

A first linear regression tested the significance of porosity, pore size, thickness (mm), roughness, and kinetic coefficient of friction of the separator on cycles before exhibiting a parasitic condition, and the following equation resulted. Table 3 also shows the coefficient associated with each property and its P-value.

Equation: Fish_Scale_Cathode_Parasitic = 43.1 - 0.863 Porosity + 640 Pore Size + 0.996 Thickness - 0.00379 Roughness - 52.6 Kinetic_Coefficient_of_Friction. The first linear regression had an R-squared value of 63.79.

Table 3

| Term | Coefficient | P-value | Adj. Sum Squared |
|---|---|---|---|
| Constant | 43.1 | 0.025 | - |
| Porosity | -0.863 | 0.030 | 306.81 |
| Pore Size | 640 | 0.012 | 445.48 |
| Thickness (mm) | 0.996 | 0.023 | 341.21 |
| Roughness | -0.00379 | 0.029 | 312.88 |
| Kinetic Coefficient of Friction | -52.6 | 0.000 | 1098.48 |

The P-values from Table 3 illustrated the strong correlation between the kinetic coefficient of friction of the separator and the cycles before exhibiting a parasitic condition.

A second linear regression tested the significance of thickness (mm), elongation at break, toughness (MPa), and Modulus of Elasticity (MPa) of the separator on cycles before exhibiting a parasitic condition, and the following equation resulted. Table 4 also shows the coefficient associated with each property and its P-value.

Equation: Fish_Scale_Cathode_Parasitic = 20.95 + 1.369 Thickness - 0.0599 Elongation + 0.0467 Toughness - 0.1619 Modulus of Elasticity. The second linear regression had an R-squared value of 56.33.

Table 4

| Term | Coefficient | P-value | Adj. Sum Squared |
|---|---|---|---|
| Constant | 20.95 | 0.016 | - |
| Thickness (mm) | 1.369 | 0.002 | 693.5 |
| Elongation at Break | -0.0599 | 0.057 | 223.8 |
| Toughness (MPa) | 0.0467 | 0.072 | 196.9 |
| Modulus of Elasticity (MPa) | -0.1619 | 0.001 | 900.7 |

The P-values from Table 4 illustrated the strong correlation between the modulus of elasticity and/or thickness of the separator and the cycles before exhibiting a parasitic condition.

A third linear regression tested the significance of porosity, pore size, kinetic coefficient of friction, and elongation at break of the separator on cycles before exhibiting a parasitic condition. In this third linear regression, only the data from Examples 1-7 and 11-23 were used (omitting Examples 8-10 which had significantly higher elongation at break, elongation/thickness, and toughness values compared to Examples 1-7 and 11-23). The following equation resulted. Table 5 also shows the coefficient associated with each property and its P-value.

Equation: Fish_Scale_Cathode_Parasitic = -897 + 15.54 Porosity - 1964 Pore Size + 88.7 Kinetic Coefficient of_Friction + 0.1183 Elongation. The third linear regression had an R-squared value of 68.25.

Table 5

| Term | Coefficient | P-value | Adj. Sum Squared |
|---|---|---|---|
| Constant | -897 | 0.018 | - |
| Porosity | 15.54 | 0.015 | 592.06 |
| Pore Size | -1964 | 0.014 | 613.95 |
| Kinetic Coefficient of Friction | 88.7 | 0.040 | 378.58 |
| Elongation at Break | 0.1183 | 0.005 | 881.90 |

The P-values from Table 5 illustrated the strong correlation between the elongation at break of the separator and the cycles before exhibiting a parasitic condition. Due to the data indicating a strong correlation between thickness of the separator and elongation at break of the separator and the cycles before exhibiting a parasitic condition, it is also expected that there is a strong correlation between the ratio of elongation:thickness and the cycles before exhibiting a parasitic condition.

The experimental data also indicates that polyethylene separators (e.g., a linear polymer) achieved improved cycles compared to polypropylene separators (e.g., a non-linear polymer).

Although the disclosed subject matter has been described in detail for the purpose of illustration based on what is currently considered to be the most practical and preferred embodiments or aspects, it is to be understood that such detail is solely for that purpose and that the disclosed subject matter is not limited to the disclosed embodiments or aspects, but, on the contrary, is intended to cover modifications and equivalent arrangements that are within the spirit and scope of the appended claims. For example, it is to be understood that the presently disclosed subject matter contemplates that, to the extent possible, one or more features of any embodiment or aspect can be combined with one or more features of any other embodiment or aspect.

**Claims**

1.  An electrochemical device, comprising:

    an anode;
    a cathode;
    an electrolyte; and
    a separator separating the anode from the cathode,
    wherein the separator comprises a material, wherein the material comprises at least one of:

       a linear polymer;
       a kinetic friction coefficient of up to 2.0;
       an elongation of at least 240, elongation defined as elongation at break;
       a ratio of elongation to thickness of at least 10; and/or
       a modulus of elasticity of up to 270 MPa.

2.  The electrochemical device of claim 1, wherein the electrochemical device comprises a lithium-chalcogen battery.

3.  The electrochemical device of any preceding claim, wherein the anode comprises at least one of an alkali metal from group IA, an alkaline earth metal from group IIA, an element from group IIIA, and/or some combination thereof.

4.  The electrochemical device of any preceding claim, wherein the cathode comprises a chalcogen.

5.  The electrochemical device of any preceding claim, wherein the cathode comprises a substrate coated with a coating comprising a carbon-chalcogen composite; and optionally wherein the coating further comprises a binder and conductive carbon.

6.  The electrochemical device of any preceding claim, wherein the electrochemical device comprises a secondary battery that performs at least 2 cycles before exhibiting a parasitic condition.

7.  The electrochemical device of any preceding claim, wherein the linear polymer comprises a linearity of at least 70%.

8.  The electrochemical device of any preceding claim, wherein the electrolyte comprises at least one of $LiBF_4$, $LiC_2F_6NO_4S_2$, $LiNS_2O_4F_2$, LiBOB, $LiPO_2F_2$, $LiPF_6$, ether, carbonate, and/or some combination thereof.

9.  A separator configured for use in an electrochemical device, the separator comprising a material, wherein the material comprises at least one of:

       a linear polymer;
       a kinetic friction coefficient of up to 2.0;
       an elongation of at least 240, elongation defined as elongation at break;
       a ratio of elongation to thickness of at least 10; and/or
       a modulus of elasticity of up to 270 MPa.

10. The separator or electrochemical device of any preceding claim, wherein the material comprises a polyethylene polymer.

11. The separator or electrochemical device of any preceding claim, wherein the separator or electrochemical device has a surface roughness (Ra) of at least 1150 Angstroms.

12. The separator or electrochemical device of any preceding claim, wherein the linear polymer has a weight average molecular weight of at least 200,000 g/mol.

13. The separator or electrochemical device of any preceding claim, wherein the separator or electrochemical device has a thickness of from 2 $\mu$m to 100 $\mu$m.

14. The separator or electrochemical device of any preceding claim, wherein the separator or electrochemical device is arranged in a secondary battery, the secondary battery comprising:

an anode comprising at least one of an alkali metal from group IA, an alkaline earth metal from group IIA, an element from group IIIA, and/or some combination thereof;
a cathode comprising a chalcogen;
an electrolyte; and
the separator separating the anode from the cathode.

15. A method of cycling a secondary battery, comprising:

(i) providing the electrochemical device of any of claims 1 to 8, wherein the electrochemical device comprises a secondary battery;
(ii) at least partially discharging the secondary battery;
(iii) at least partially charging the secondary battery; and
(iv) repeating (ii) and (iii) until the secondary battery exhibits a parasitic condition during charging;

and optionally wherein the secondary battery is at least partially discharged and charged at least 2 times before exhibiting the parasitic condition.

FIG. 1

FIG. 2

**REFERENCES CITED IN THE DESCRIPTION**

**Patent documents cited in the description**

- US 63426864

- US 11114696 B